(19) Europäisches Patentamt
European Patent Office
Office européen des brevets

(11) EP 3 065 104 A1

(12) **EUROPEAN PATENT APPLICATION**

(43) Date of publication:
07.09.2016 Bulletin 2016/36

(51) Int Cl.:
*G06T 5/00* (2006.01)        *G06T 11/00* (2006.01)

(21) Application number: 15305335.0

(22) Date of filing: 04.03.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• Haupt, Dieter
21339 Lüneburg (DE)
• Freimann, Achim
30163 Hannover (DE)

(74) Representative: Huchet, Anne et al
Technicolor
1, rue Jeanne d'Arc
92443 Issy-les-Moulineaux (FR)

(54) **Method and system for rendering graphical content in an image**

(57) A method and a system (100) for rendering a graphical object in an image are described. A receiving unit (101) of the system receives (20) a graphical object and an image captured by a camera. An operation unit (103) of the system identifies (21) an area of the image and determines (22) a blurring level of the identified area. The visual appearance of the received graphical object is adjusted (23) according to the blurring level of the identified area. The adjusted graphical object is then rendered (24) in the identified area of the image.

| Receiving graphical object, image (and metadata) | 20 |
| Identifying an area of the image | 21 |
| Determining blurring level of the selected area | 22 |
| Adjusting visual appearance of the graphical objcet | 23 |
| Rendering the graphical object in the image area | 24 |
| Providing the image to a display | 25 |

**Fig. 2**

EP 3 065 104 A1

## Description

## TECHNICAL FIELD

The present invention relates to a method and a system for rendering graphical content in an image, particularly according to the blurring levels of different areas in the image. The invention further relates to a computer readable medium suitable for such a method and a system.

## BACKGROUND

Graphical content insertion is an emerging application of video analysis and has been widely applied in video augmentation to improve the audiences' viewing experience. One practical application of such insertion is the advertisement integration into videos or images, which provides huge business opportunities for advertisers.

One major challenge for graphical content integration in a target video or image is to balance its two conflicting tasks, which are to make the inserted content conspicuous enough to be noticed by a viewer, preferably be perceived as part of the original content, and meanwhile not to interfere with the viewer's viewing experience of the original content.

The visual performance of the rendered graphical content is significant and influential for the viewing experience. Among others, the sharpness or blurring level of the graphical content is particularly important and should be considered for the integration.

One solution to solve the problem of blurring levels is to increase the DOF of the images, which can be accomplished by using a camera with a lens of a smaller aperture (higher *f*-number) or shorter focal length to capture the images. In this way, any inserted graphical content can lie within the DOF and be sufficiently sharp. However, this solution restricts an operator and reduces the flexibility to edit and render the graphical content.

## SUMMARY

In an image of a given video, different areas might have varied blurring levels depending on the focus distance and the depth-of-field (DOF) of the image. The graphical content inserted in the image should be adjusted and modified accordingly to match the surrounding scene and thus can improve the integration result. For example, the graphical content inserted outside of the DOF should appear blurred, rather than clear and sharp.

Therefore, it is an objective of the present principles to propose an improved solution for rendering graphical content in an image or a video.

According to one embodiment, a method for rendering a graphical object in an image is proposed. The method comprises: receiving a graphical object and an image; identifying an area of the image; determining a blurring level of the identified area; adjusting visual appearance of the graphical object according to the blurring level of the identified area; and rendering the adjusted graphical object in the identified area of the image.

In one embodiment, the determination of a blurring level of the identified area is performed using technique of image analysis.

In a preferred embodiment, the image is captured by a camera, and the method further comprises receiving metadata of the image which comprises information about the setting of the camera, for example, focal length, focus distance and aperture of the camera lens.

In one embodiment, the determination of a blurring level of the identified area comprises: detecting a focal plane of the image; detecting a surface plane on which the identified area is located; determining the distance difference between the surface plane and the focal plane; and determining a blur disc diameter for the identified area.

In one embodiment, the received image is retrieved from a video sequence captured by the camera. Accordingly, the method further comprises receiving a plurality of images from the video sequence and metadata of the plurality of images, the metadata comprising information about the setting of the camera; and iterating the steps of the method on the plurality of images.

In one embodiment, the method further comprises providing the image on which the graphical object is rendered to a display.

According to one embodiment, a system configured to render a graphical object in an image is introduced. The system comprises a receiving unit, a storage unit and an operation unit. The receiving unit is configured to receive a graphical object and an image. The storage unit is configured to store the received graphical object and image. The operation unit (103) is configured to identify an area of the image, determine a blurring level of the identified area, adjust visual appearance of the graphical object according to the blurring level of the identified area; and render the adjusted graphical object in the identified area of the image.

In one embodiment, the image is captured by a camera. The receiving unit (101) is configured to further receive metadata of the image which comprises information about the setting of the camera, for example, focal length, focus distance and aperture of the camera lens.

In one embodiment, the operation unit is further configured to detect a focal plane of the image, detect a surface plane on which the identified area is located, determine the difference between the surface plane and the focal plane, and determine a blur disc diameter for the identified area.

In one embodiment, the operation unit is further configured to receive a plurality of images from a video sequence and metadata of the plurality of images.

In one embodiment, the operation unit is further configured to provide the image on which the graphical object is rendered to a display.

In one embodiment, the system further comprises a user interface configured to enable a user to interact with the system.

Also, a computer readable storage medium has stored therein instruction for rendering a graphical object in an image, which when executed by a computer, cause the computer to: receive a graphical object and an image; identify an area of the image; determine a blurring level of the identified area; adjust visual appearance of the graphical object according to the blurring level of the identified area; and render the adjusted graphical object in the identified area of the image.

The computer readable storage medium is a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program steps as described herein.

The proposed method and system provide improved solutions for rendering graphical content in an image. By decision of the blurring level of an identified insertion area and adjustment of the visual appearance of a target graphical content, the inserted graphical content becomes more compatible to the surrounding and original content of the image, and thus makes the insertion more subconsciously recognized with less disturbance for a viewer. In the case where the images are retrieved from a video sequence and several images are utilized for the insertion of graphical content, the respective adjustment of the graphical content can improve the continuity and consistency of the viewing experience on the video sequence.

## BRIEF DESCRIPTION OF THE DRAWINGS

For a better understanding the proposed solutions shall now be explained in more detail in the following description with reference to the figures. It is understood that the solutions are not limited to this disclosed exemplary embodiments and that specified features can also expediently be combined and/or modified without departing from the scope of the proposed solutions as defined in the appended claims.

Fig. 1 is a schematic diagram illustrating an exemplary system configured to render a graphical object in an image.

Fig. 2 is a flow chart illustrating a preferred embodiment of a method for rendering a graphical object in an image.

Fig. 3 shows an exemplary image on which two exemplary areas are identified according to one embodiment of the method.

Fig. 4 is a flow chart illustrating the determination of the blurring level of an identified area according to one embodiment of the method.

Fig. 5 is a schematic diagram to illustrate the Depth-of-Field and the blur disc diameter for an exemplary camera lens according to one embodiment of the method.

Fig. 6 is a schematic diagram to illustrate an out-of-focus object and the corresponding blur disc diameter according to one embodiment of the method.

Fig. 7 shows exemplary results obtained from one embodiment of a method for rendering a graphical object in an image.

Fig. 8 shows the results obtained from another embodiment of a method for rendering a graphical object in images of a video sequence.

## DETAILED DESCRIPTION OF PREFERRED EMBODIMENTS

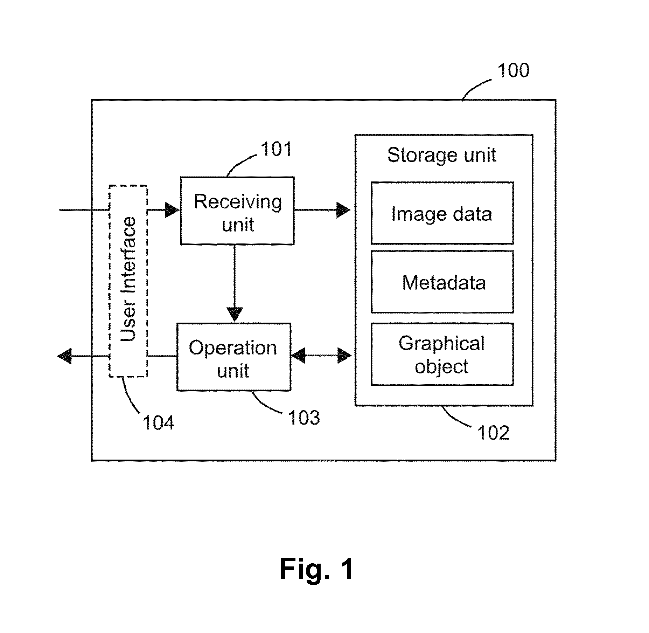

Fig. 1 schematically illustrates an exemplary embodiment of a system 100 configured to render a graphical object in an image. The system 100 comprises a receiving unit 101, a storage unit 102, and an operation unit 103.

The receiving unit 101 is configured to receive a graphical object and an image, and optionally metadata of the image. The graphical object can be, for example, a 2D or 3D image, a graphical picture, an advertisement image, a text entry and any other visual data that is suitable to be inserted and integrated in an image. Preferably, the received image is captured and provided by a camera to the system 100. The metadata of the image preferably comprises information about the setting of the camera.

The storage unit 102 is configured to store the received graphical object and image, and optionally metadata of the image. In alternative, the same can be stored in one or more suitable memory units either integrated in the system 100 or supplementary to the system 100 (not shown).

The operation unit 103 is configured to identify an area of the image, determine a blurring level of the identified area, adjust visual appearance of the graphical object according to the blurring level of the identified area, and render the adjusted graphical object in the identified area of the image. Preferably, the operation unit 103 is further configured to provide the image on which the graphical object is rendered to a display. More details about the operation of the operation unit 103 will be described below.

Optionally, the system 100 further comprises a user interface 104 configured to provide an interface enabling a user to interact with and control the system 100.

For example, a user can enter a user input to the system 100 for receiving an image and the metadata of the image and for providing to a display or screen the integrated images on which graphical objects are rendered. The visual appearance and the design of the user interface 104 can be flexible and varied for different demands and purposes. Of course, the system 100 can optionally comprise other additional or alternative devices for the implementation of the embodiments of the following proposed methods.

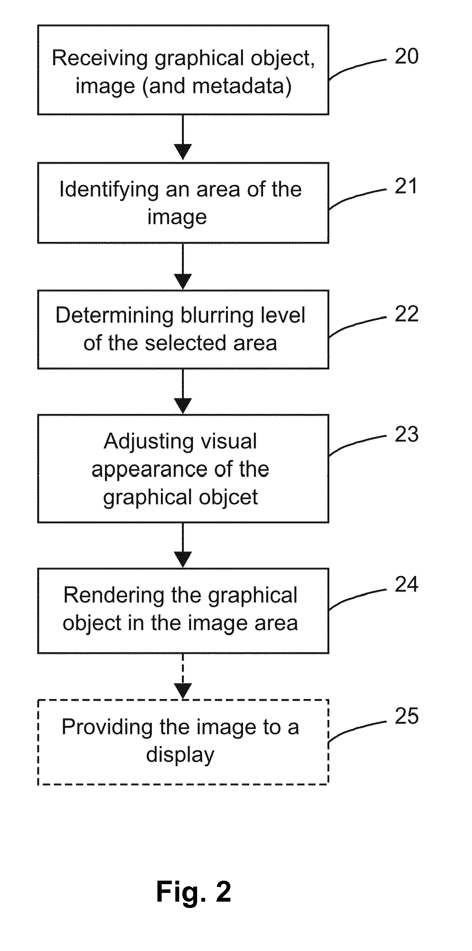

Fig. 2 schematically illustrates a preferred embodiment of the method for rendering a graphical object in an image. The method comprises: receiving 20 a graphical object and an image; identifying 21 an area of the image; determining 22 a blurring level of the identified area; adjusting 23 visual appearance of the graphical object according to the blurring level of the identified area; and rendering 24 the adjusted graphical object in the identified area of the image. Optionally, the method further comprises providing 25 the image on which the graphical object is rendered to a display. Of course, the proposed method can receive multiple graphical objects and images depending on different uses and demands. In other words, the amount of the received graphical object and images should be understood as flexible and unlimited. Hereinafter, one graphical object and one image are used as an example for a brief and clear description.

Referring to Fig. 1, one preferred embodiment of the method will be further explained in detail below using the exemplary embodiment of the system 100. It should be understood that the method can be implemented in any other suitable systems or apparatuses known and available in the field.

The receiving unit 101 of the system 100 receives 20 a graphical object and an image, and optionally metadata of the image. The image is preferably captured by a known or given camera, and the metadata of the image preferably comprises information about the setting of the camera, such as the focal length and aperture of the camera lens. This information can be generally and easily acquired when a consumer or professional digital camera is used. Of course, the metadata can include any other data and information about the received image, depending on different demands and practical situations when implementing the method. For example, some of the metadata can belong to the image such as f-number, aperture, distance of focal plane, etc. In addition, the metadata can also include information about the graphical content in the image, such as the distances and positions of the graphical objects in the received image.

The received graphical object, image and metadata of the image can be optionally stored in the storing unit 102 of the system and subsequently retrieved and used by the operation unit 103.

An area of the image is identified 21 as a potential region to render the graphical object, either manually by an operator via the user interface 104 of system 100 or automatically by the operation unit 103. In one embodiment, the area can be detected and identified by the operation unit 103 utilizing any known techniques such as object tracking or any other methods.

In one embodiment, the area of the image can be identified by the operation unit 103 using the received metadata of the image. In this situation, the operation unit 103 can utilize directly the information included in the metadata without additional calculation. For example, the areas of the image can be pre-identified and/or preselected by an image producer or an operation device in advance, in which case the identification and/or selection of the areas of the image becomes a precedent step of the proposed methods.

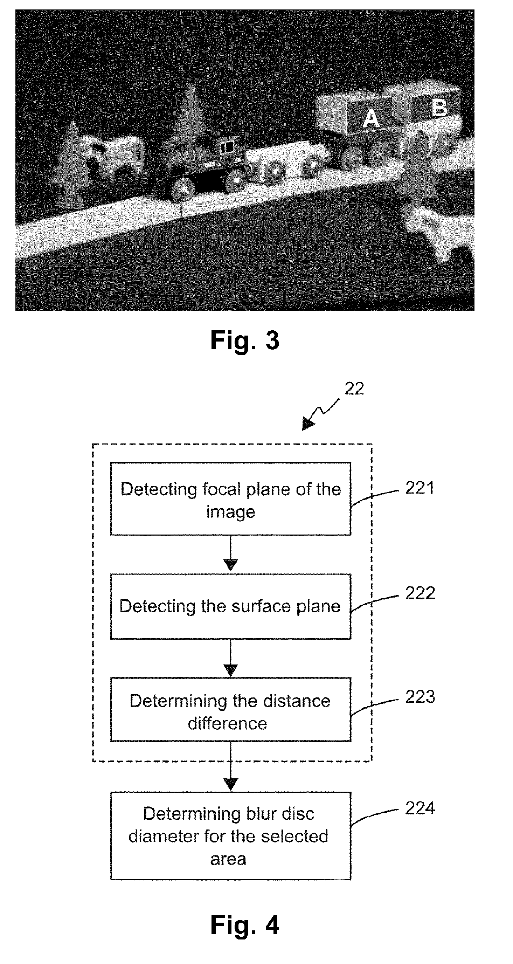

Fig. 3 shows one exemplary image in which two exemplary areas "A" and "B" are identified. The areas are suitable for rendering a graphical object therein and are in the shape of prospectively distorted rectangles in this exemplary image. Of course, the shape, size, location and other characteristics of the identified area can be flexibly decided according to different demands and requirements.

A blurring level of the identified area is then determined 22, preferably by the operation unit 103 of the system 100. In one embodiment, the blurring level for the identified area is preferably described by the value of a blur disc diameter corresponding to the same. Of course, the blurring level can also be described by any other appropriate parameters or characteristics which can be arbitrarily selected by an operator.

In one embodiment where the metadata of the image is not received together with the image itself, the blurring level of the identified area is preferably determined 22 by the operation unit 103 using technique of image analysis. Any known or feasible image analysis technique and method can be applied and used here, such as edge and blur estimation [I], defocus blur estimation [II, III] and methods that can be applied to fill regions without sufficient estimation data [IV].

Referring to Fig. 4, in another embodiment when the metadata of the image is received together with the image, the determination 22 of the blurring level of the identified area preferably comprises: detecting 221 a focal plane of the image; detecting 222 a surface plane on which the identified area is located; determining 223 the distance difference between the surface plane and the focal plane; and determining 224 a blur disc diameter for the identified area. The focal plane is generally understood and defined as a plane in the scene on which an in-focus object of the image is located. The distance from the focal plane to the camera lens is generally denoted as the focus distance or object distance. For clarity and consistency of the specification, the term "focus distance" is used hereinafter.

The focal plane and thus the focus distance of the image can be detected 221 by the operation unit 103 using known and available techniques such as depth estimation. In alternative, in the case where the information about the focal plane and the focus distance is included in the received metadata 20, the operation unit 103 can detect 221 and use the information directly by retrieving the information from the received metadata. The surface plane of the identified area can be detected 222 and decided by the operation unit 103 as well using feasible techniques such as depth estimation. Once the two parameters are detected 221, 222, the distance difference between the surface plane of the identified area and the focal plane of the image can be easily decided 223 by, for example, depth estimation techniques.

In one embodiment, the detections 221, 222 of the focal plane and the surface plane and the determination 223 of the difference thereof can be optionally combined and performed jointly by the operation unit 103 using suitable and available techniques such as depth estimation.

The determination 224 of the blur disc diameter for the identified area in the image is preferably performed according to

$$u = \frac{f \cdot m}{N} \cdot \frac{|x_D|}{v + x_D} \quad ,$$

where $u$ is the blur disc diameter, $f$ and $N$ are focal length and aperture of the camera lens, $m$ is the object magnification of the identified area, $v$ is the focus distance of the image, and $x_D$ is the distance difference between the surface plane and the focal plane. Depending on the units used for the values of $f$, $v$ and $x_D$, the blur disc diameter $u$ can be in millimeters or meters. In alternative, the blur disc diameter $u$ can be expressed in pixels when the pixel density of the sensor is used.

The object magnification of the identified area ($m$) is denoted as

$$m = \frac{b}{v} = \frac{f}{v - f} \quad ,$$

where $b$ is the image distance corresponding to the focus distance $v$ and can be defined by the Gaussian lens formula

$$\frac{1}{f} = \frac{1}{v} = \frac{1}{b} \quad .$$

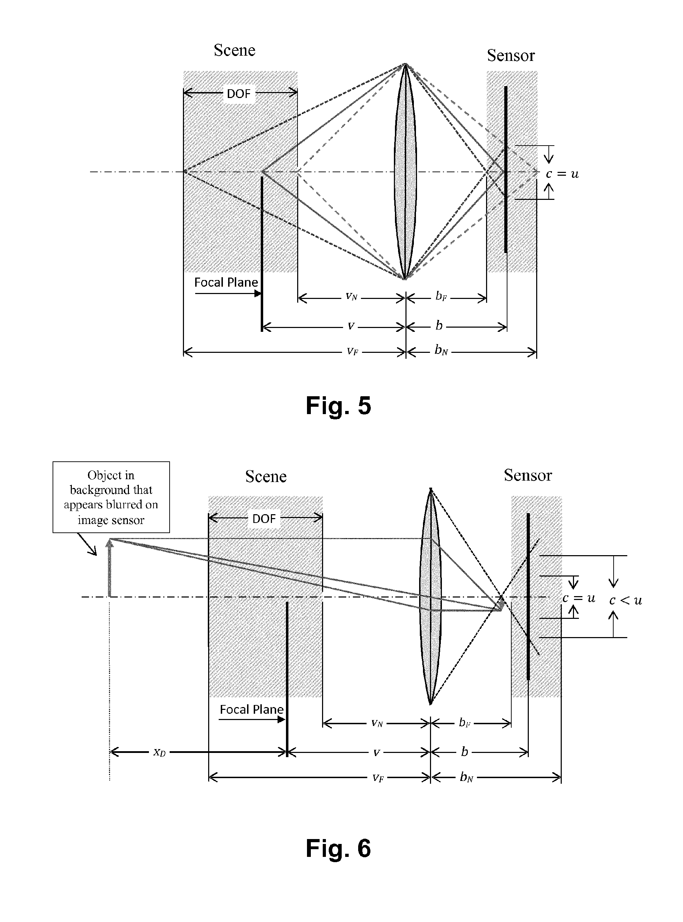

Fig. 5 shows a schematic diagram illustrating the above formulas and the details thereof, where the symbols are defined as:

DOF : Depth of field
$v_N$ : Near DOF object distance
$v_F$ : Far DOF object distance
$b_N$ : Image distance corresponding to $v_N$
$b_F$ : Image distance corresponding to $v_F$

$c$ : Circle of confusion

The circle of confusion (COC) is the largest permissible blur disc diameter ($u$) measured on the sensor that gives a reasonably sharp viewing impression. For example, for 35mm sensors, the value of c are reported to be in the range of 25-35 $\mu$m. All objects in a scene that result in an image with a blur disc diameter $u \leq c$ would appear acceptably sharp and accordingly lay within the depth of field $v_N \leq v \leq v_F$.

Referring to Fig. 6, when an object is located on a surface plane outside the DOF and lays in the foreground ($v \leq v_N$) or background ($v > v_F$), the blur disc diameter corresponding to the surface plane would become larger, i.e. $u > c$, and an object on this surface plane would thus appear blurred on the sensor.

In other words, with the determination 224 of the blur disc diameter ($u$) for an identified area on a certain surface plane, the blurring level of the identified area can be described and determined 22. A larger blur disc diameter represents a higher blurring level of the identified area, compared to other regions of the same image.

Subsequent to the determination 22 of the blurring level of the identified area, either by an image analysis of the image or by the above described method using the metadata of the image, the visual appearance of the graphical object is adjusted 23 according to the determined blurring level. The adjustment can be performed by the operation unit 103 of the system 100 using available blur filters such as a Gaussian blur filter known in the field or a Smoothing filter [V]. Of course, any other blur filters or similar techniques can also be used to adjust the visual appearance of the graphical object. Since the blurring effects of different filters are varied, e.g. the Gaussian blur filter yields a weaker blurring effect than a smoothing filter, there is a need to choose the size of the 2D filter kernel with respect to the blur disc diameter and the strength of the filter when in practical use.

The adjusted graphical object is then rendered in the identified area of the image by the operation unit 103 of the system 100, using, for example, alpha-blending, or any other feasible techniques. Optionally, referring to Fig. 2, the operation unit 103 of the system 100 can provide 25 the image integrated with the graphical object to a display or screen, either via the user interface 104 or other transmitting device. The image integrated with the adjusted graphical object can thus be displayed and viewed by a viewer on the display or screen. In alternative, the image with the adjusted graphical object can be stored in the storing unit 102.

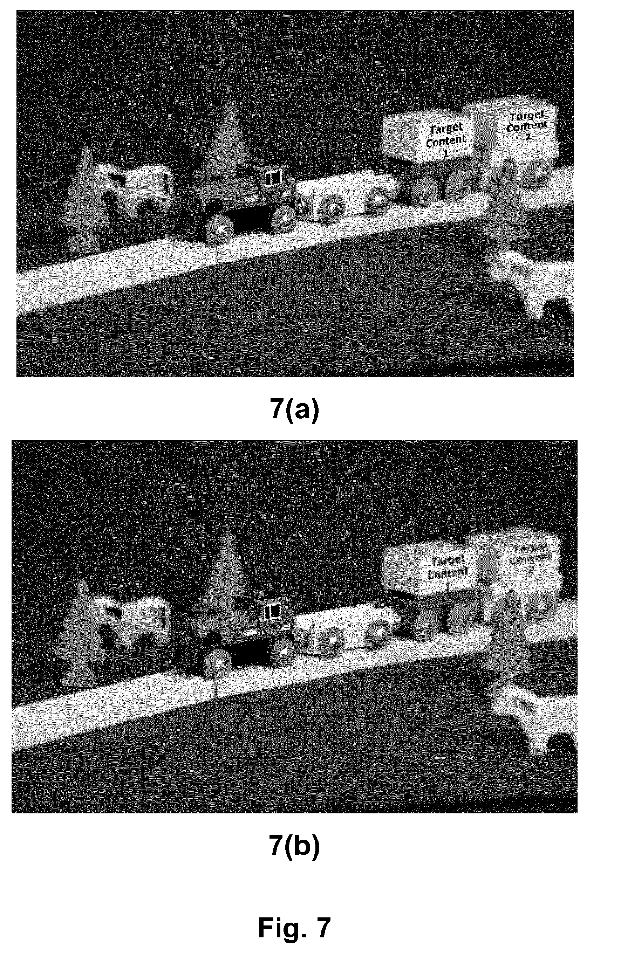

Fig. 7 shows exemplary rendering results obtained without and with utilization of the proposed method for rendering a graphical object in an image, corresponding to the same image shown in Fig. 3. The graphical objects used here are the text entries "Target Content 1" and "Target Content 2", which are respectively rendered on the areas A and B in the images. The scene captured in the images employs only a small Depth-of-Field with the focal plane located near the line between the left and right trees. Accordingly, all the items and objects that are in front of or behind the focal plane are blurred in varied levels depending on their distance to the focal plane. It can be clearly seen that the blurring level of area B is larger than the one of area A, because area B is farther from the focal plane.

Fig. 7(a) shows the rendering result without utilizing the proposed method. That is, the graphical objects are not adjusted according to the blurring levels of the identified areas A and B, and thus mismatch the visual appearance of the surrounding scene. This deficiency obviously reduces the overall image impression and thus disturbs the viewing experience.

Fig. 7(b) shows the result on which the graphical objects are adjusted according to the blurring level of the identified areas on which they are rendered. The text entry "Target Content 2" is blurrier than the other text entry "Target Content 1", depending on the blurring levels of the areas B and A.

In one embodiment of the method, the received image is retrieved from a video sequence captured by the camera. The retrieval of the image from the video sequence can be performed by the operation unit 103 of the system 100 upon receipt of the video sequence by the receiving unit 101. Alternatively, the retrieval of the image can be performed by other devices as a precedent of the method.

In one embodiment, a plurality of images are received 20 from the video sequence by the receiving unit 101. The steps of the proposed method are then iterated on the plurality of images such that the graphical objects can be rendered properly and differently in each of the images. In other words, the steps of identifying an area for each of the images, determining a blurring level of the identified areas, adjusting visual appearance of the graphical objects according to the determined blurring levels and rendering the adjusted graphical object in the identified areas are iterated on the images of the video sequence. The resulting images and the corresponding video sequence can thus show a dynamic image sequence where the rendered graphical objects are moving and with a proper blurring level throughout the sequence. This is especially useful for the situations such as when the identified areas are moving, when the camera view and thus some static target surface in the background is changing, or a combination of both.

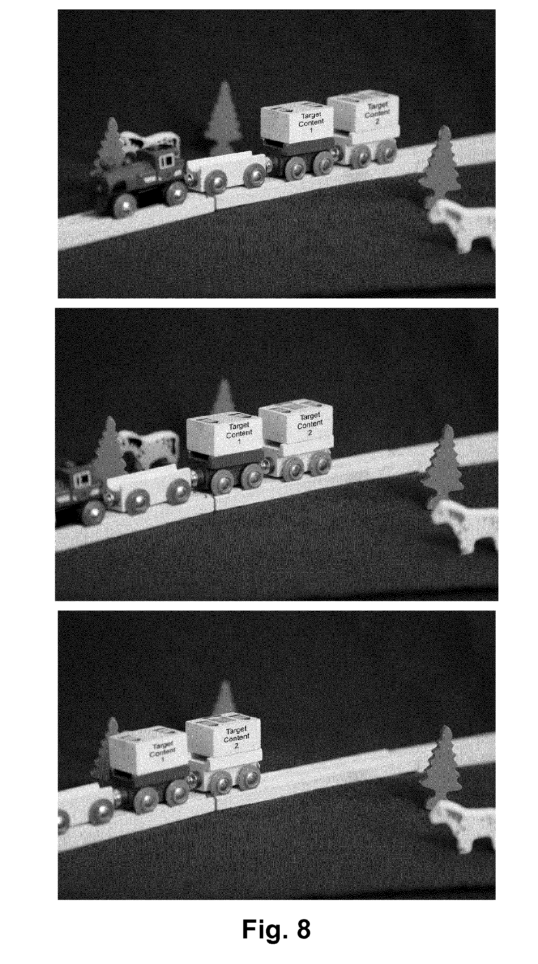

Fig. 8 depicts an exemplary result showing how the visual appearance of the graphical objects is adjusted and changed accordingly throughout three successive images. Corresponding to the movement of the identified areas A and B, which have varied blurring levels in each of the images, the visual appearance of the text entries "Target Content 1" and "Target Content 2" are adjusted respectively and accordingly in the images.

## REFERENCE

[I] J. H. Elder, S. W. Zucker, Local scale control for edge detection and blur estimation, IEEE Transactions on PAMI 20, 7 (1998), 699-716

[II] X. Zhu, , S. Cohen, S. Schiller, and P. Milanfar, Estimating Spatially Varying Defocus Blur From A Single Image, IEEE Transactions on Image Processing, Vol. 22, No. 12, December 2013

[III] S. Bae, F. Durand, Defocus Magnification, Eurographics 2007, Vol. 26 (2007), No. 3, 571-579

[IV] A. Levin, D. Lischinski, Y. Weiss, Colorization using optimization, ACM Transactions on Graphics 23, 3 (2004), 689-694. Proceeding of ACM SIGGRAPH conference

[V] R. Fisher, S. Perkins, A. Walker and E. Wolfart, Smoothing filter, retrieved from University of Edinburgh School of Informatics. http://homepages.inf. ed.ac.uk/rbf/HIPR2/mean.htm

## Claims

1. A method for rendering a graphical object in an image, comprising:

   - receiving (20) a graphical object and an image;
   - identifying (21) an area of the image;
   - determining (22) a blurring level of the identified area;
   - adjusting (23) visual appearance of the graphical object according to the blurring level of the identified area; and
   - rendering (24) the adjusted graphical object in the identified area of the image.

2. The method of claim 1, wherein determining (22) the blurring level of the identified area is performed using technique of image analysis.

3. The method of claim 1, wherein the image is captured by a camera, and the method further comprises receiving (20) metadata of the image which comprises information about the setting of the camera.

4. The method of claim 3, wherein the metadata of the image comprises information about focal length, focus distance and aperture of the camera lens.

5. The method of claim 3 or 4, wherein determining (22) the blurring level of the identified area comprises:

- detecting (221) a focal plane of the image;
- detecting (222) a surface plane on which the identified area is located;
- determining (223) the distance difference between the surface plane and the focal plane; and
- determining (224) a blur disc diameter for the identified area.

**6.** The method of claim 5, wherein determining (22) the blur disc diameter for the identified area is according to

$$u = \frac{f \cdot m}{N} \cdot \frac{|x_D|}{v + x_D} \quad,$$

where $u$ is the blur disc diameter, $f$ and $N$ are focal length and aperture of the camera lens, $m$ is the object magnification of the identified area, $v$ is the focus distance of the image, and $x_D$ is the difference between the surface plane and the focal plane.

**7.** The method of one of claims 3 to 6, wherein the image is retrieved from a video sequence captured by the camera.

**8.** The method of claim 7, further comprising:

- receiving (20) a plurality of images from the video sequence and metadata of the plurality of the images, the metadata comprising information about the setting of the camera; and
- iterating the steps of the method on the plurality of images.

**9.** The method of one of the preceding claims, further comprising providing (25) the image on which the graphical object is rendered to a display.

**10.** A system (100) configured to render a graphical object in an image, comprising:

- a receiving unit (101) configured to receive (20) a graphical object and an image;
- a storage unit (102) configured to store the received graphical object and image; and
- an operation unit (103) configured to
identify (21) an area of the image;
determine (22) a blurring level of the identified area;
adjust (23) visual appearance of the graphical object according to the blurring level of the identified area; and
render (24) the adjusted graphical object in the identified area of the image.

**11.** The system (100) of claim 10, wherein the image is captured by a camera, and wherein the receiving unit (101) is configured to further receive metadata of the image which comprises information about the setting of the camera, and the storing unit (102) is configured to further store the received metadata of the image.

**12.** The system (100) of claim 11, wherein the operation unit (103) is configured to
detect (221) a focal plane of the image;
detect (222) a surface plane on which the identified area is located;
determine (223) the difference between the surface plane and the focal plane; and
determine (224) a blur disc diameter for the identified area.

**13.** The system (100) of one of claims 10 to 12, wherein the operation unit (103) is configured to provide (25) the image on which the graphical object is rendered to a display.

**14.** The system of one of claims 10 to 13, further comprising a user interface (104) configured to enable a user to interact with the system (100).

**15.** A computer readable storage medium having stored therein instruction for rendering a graphical object in an image, which when executed by a computer, cause the computer to:

- receive a graphical object and an image;
- identify an area of the image;
- determine a blurring level of the identified area;
- adjust visual appearance of the graphical object according to the blurring level of the identified area; and
- render the adjusted graphical object in the identified area of the image.

**Fig. 1**

Receiving graphical object, image (and metadata) — 20

↓

Identifying an area of the image — 21

↓

Determining blurring level of the selected area — 22

↓

Adjusting visual appearance of the graphical objcet — 23

↓

Rendering the graphical object in the image area — 24

↓

Providing the image to a display — 25

# Fig. 2

**Fig. 3**

Detecting focal plane of the image — 221

Detecting the surface plane — 222

Determining the distance difference — 223

Determining blur disc diameter for the selected area — 224

**Fig. 4**

Scene                                    Sensor

DOF

$c = u$

Focal Plane

$v_N$      $b_F$

$v$        $b$

$v_F$      $b_N$

## Fig. 5

Object in
background that
appears blurred on
image sensor

Scene                                    Sensor

DOF

$c = u$   $c < u$

Focal Plane

$v_N$      $b_F$

$x_D$                    $v$        $b$

$v_F$      $b_N$

## Fig. 6

7(a)

7(b)

Fig. 7

## Fig. 8

Europäisches
Patentamt

European
Patent Office

Office européen
des brevets

# EUROPEAN SEARCH REPORT

Application Number

EP 15 30 5335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/257908 A1 (OTA MANABU [JP] ET AL) 3 October 2013 (2013-10-03) * abstract * * paragraph [0064] - paragraph [0094] * ----- | 1-15 | INV. G06T5/00 G06T11/00 |
| X | BUNYO OKUMURA ET AL: "Augmented reality based on estimation of defocusing and motion blurring from captured images", MIXED AND AUGMENTED REALITY, 2006. ISMAR 2006. IEEE/ACM INTERNATIONAL SYMPOSIUM ON, 22 October 2006 (2006-10-22), - 25 October 2006 (2006-10-25), pages 219-225, XP058033328, DOI: 10.1109/ISMAR.2006.297817 ISBN: 978-1-4244-0650-0 | 1-5,7-15 | |
| A | * abstract * * page 220, column 2 - page 222, column 2 * ----- | 6 | |

TECHNICAL FIELDS
SEARCHED (IPC)

G06T

The present search report has been drawn up for all claims

| Place of search | Date of completion of the search | Examiner |
|---|---|---|
| Munich | 14 September 2015 | Millet, Christophe |

EPO FORM 1503 03.82 (P04C01)

## ANNEX TO THE EUROPEAN SEARCH REPORT
## ON EUROPEAN PATENT APPLICATION NO.

EP 15 30 5335

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2015

| Patent document cited in search report | Publication date | Patent family member(s) | Publication date |
|---|---|---|---|
| US 2013257908 A1 | 03-10-2013 | CN 103370732 A<br>JP 2012174116 A<br>US 2013257908 A1<br>WO 2012114639 A1 | 23-10-2013<br>10-09-2012<br>03-10-2013<br>30-08-2012 |

EPO FORM P0459

# EP 3 065 104 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. H. ELDER ; S. W. ZUCKER.** Local scale control for edge detection and blur estimation. *IEEE Transactions on PAMI,* 1998, vol. 20 (7), 699-716
- **X. ZHU ; S. COHEN ; S. SCHILLER ; P. MILANFAR.** Estimating Spatially Varying Defocus Blur From A Single Image. *IEEE Transactions on Image Processing,* December 2013, vol. 22 (12
- **S. BAE ; F. DURAND.** Defocus Magnification. *Eurographics,* 2007, vol. 26 (3), 571-579
- **A. LEVIN ; D. LISCHINSKI ; Y. WEISS.** Colorization using optimization. *ACM Transactions on Graphics,* 2004, vol. 23 (3), 689-694
- **R. FISHER ; S. PERKINS ; A. WALKER ; E. WOLFART.** *Smoothing filter, http://homepages.inf.ed.ac.uk/rbf/HIPR2/mean.htm*